# EUROPÄISCHE PATENTSCHRIFT

(11) **EP 1 635 075 B1**
(45) Veröffentlichungstag und Bekanntmachung des Hinweises auf die Patenterteilung: **22.08.2007**
(21) Anmeldenummer: 05019180.8
(22) Anmeldetag: 03.09.2005
(51) Int. Cl.: F16B 7/18

(54) **Verbindungsvorrichtung**
Connection device
Dispositif de connection

(30) Priorität: 11.09.2004 DE 102004043964
(43) Veröffentlichungstag der Anmeldung: 15.03.2006
(73) Patentinhaber: RK Rose + Krieger GmbH Verbindungs- und Positioniersysteme, 32423 Minden (DE)
(72) Erfinder: Schunke, Kurt, 32427 Minden (DE); Buchholz, Bernd, Dr., 32369 Rahden (DE); Scheibe, Jörg, 31655 Stadthagen (DE)
(74) Vertreter: Specht, Peter

(56) Entgegenhaltungen:
- EP-A- 0 671 581
- EP-A- 0 869 248
- EP-A- 1 050 691
- EP-A- 1 247 999
- EP-A- 1 335 138

## Beschreibung

Die vorliegende Erfindung betrifft eine Verbindungsvorrichtung gemäß dem Oberbegriff des Anspruchs 1.

Eine derartige Verbindungsvorrichtung ist aus der EP 0 460 360 B1 bekannt. Diese Verbindungsvorrichtung, die sich prinzipiell bewährt hat, ist geeignet, zwei winklig zueinander stehende Profilstäbe miteinander zu verbinden, die im Querschnitt gleich sind, zumindest jedoch in den Breitenabmessungen der einander zugewandten Längsnuten.

Dabei ragt die stimseitig am zweiten Profilstab anliegende Leiste teilweise in den nach oben hin offenen Bereich der Längsnute des ersten Profilstabes hinein und liegt dort an den Seitenwandungen der Längnut an.

Eine Verbindungsvorrichtung gemäß dem Oberbegriff des Anspruchs 1 ist auch aus der EP 1 050 691 A2 bekannt.

Eine insoweit vergleichbare Verbindungsvorrichtung ist weiterhin in der DE 38 29 306 A1 gezeigt und beschrieben, wobei sowohl die Breite der Leiste wie auch des Nutensteins, mit dem die Leiste am ersten Profilstab verspannt wird, abhängig ist von der Breite der zugeordneten Längsnut.

Für höhere Belastungen kommen vielfach erste Profilstäbe zum Einsatz, deren Querschnittsabmaße wesentlich abweichen vom Querschnittsabmaß des stirnseitig darauf aufstehenden zweiten Profilstabes.

Um die beiden unterschiedlichen Profilstäbe miteinander zu verbinden ist die Verbindungsvorrichtung ausgehend von den Maßen des zweiten, kleineren Profilstabes so dimensioniert, wobei die Längsnut des ersten Profilstabes entsprechend schmal gehalten wird, um die Leiste, deren Breite der von Längsnuten des zweiten Profilstabes entspricht, verdrehsicher in der Längsnut des ersten Profilstabes halten zu können. Diese Längsnut ist demzufolge an die Breite der relativ schmalen Leiste angepasst. Die standardisierte Bemessung der Längsnuten beider Profilstäbe richtet sich also nach dem kleineren Querschnitt des zweiten Profilstabes, um so den größeren Profilstab sowohl mit den kleineren wie auch mit größeren verbinden zu können.

Insbesondere dann, wenn zwei größere Profilstäbe miteinander verbunden werden, beeinträchtigen die relativ kleinen Verbindungsvorrichtungen die Belastungsfähigkeit im Verbindungsbereich, so dass keine diesbezüglich optimierte Verbindung möglich ist.

Zur Erhöhung der Belastungsfähigkeit ist es daher bekannt, als Verbindungsvorrichtung Knoten oder Winkel einzusetzen, die an den Außenseiten der beiden miteinander zu verbindendenden Profilstäbe befestigt werden, beispielsweise durch Verschrauben.

Allerdings stellt diese Art der Verbindung keine optimierte Lösung dar, vor allem, da sie nur mit einem erheblichen Montageaufwand hergestellt werden kann. Aber auch in gestalterischer Hinsicht lassen derartige Verbindungsvorrichtungen sehr zu wünschen übrig.

Der vorliegenden Erfindung liegt daher die Aufgabe zugrunde eine Verbindungsvorrichtung der gattungsgemäßen Art so weiter zu entwickeln, dass ihre Verwendungsfähigkeit verbessert wird.

Diese Aufgabe wird durch eine Verbindungsvorrichtung gelöst, die die Merkmale des Anspruchs 1 aufweist.

Diese konstruktive Ausgestaltung erlaubt nun, dass die Verbindungsvorrichtung praktisch universell einsetzbar ist, das heißt, dass sie sowohl zur Verbindung von im Querschnitt gleich großen Profilstäben, aber auch von im Querschnitt unterschiedlicher Profilstäbe einsetzbar ist, wobei in letzterem Fall der Profilstab mit kleinerem Querschnitt stirnseitig am Profilstab mit größerem Querschnitt anliegt.

Aufgrund der optimierten Querschnittsgröße der Längsnut des größeren Profilstabes kann der darin einliegende Nutenstein ebenfalls entsprechend groß dimensioniert sein, wodurch sich eine wesentlich höhere Belastungsfähigkeit ergibt als bisher.

Durch die Ausnehmung, in der die Leiste weitgehend passgenau einliegt, wird eine Verdrehsicherung der Leiste und damit des stirnseitig am zweiten Profilstab anliegenden ersten Profilstab erreicht. Insbesondere dann, wenn die Leiste endseitig jeweils mit einem Ansatz versehen ist, der in eine zugeordnete Längsnut des aufliegenden zweiten Profilstabes ragt, wobei das lichte Abmaß der Längsnuten des zweiten Profilstabes der Breite des Ansatzes entspricht.

Zweckmäßiger Weise ist der hammerkopfartig ausgebildete Nutenstein so dimensioniert, dass sein schmalerer Teil in der Höhe etwa der Höhe des offenen Bereiches der T-förmigen Nut entspricht. Da die Leiste, bezogen auf ihre Dicke, vollständig in den offenen Bereich der Längsnut eintaucht, so dass der zweite Profilstab stimseitig vollflächig an der zugeordneten Längsseite des ersten Profilstabes anliegt, liegt die Leiste mit ihren Seitenwandungen an den Seitenwänden der Ausnehmung an.

Nach einer vorteilhaften Weiterbildung der Erfindung ist vorgesehen, den Nutenstein an zwei sich diagonal gegenüberliegenden Eckbereichen abzuschrägen oder abzurunden, wobei die Länge des Nutensteins, die gleichbedeutend ist mit der Länge der Ausnehmung, gleich dem lichten Maß der offenen Seite der Längsnut ist. Hierdurch besteht die Möglichkeit den Nutenstein von oben her in die Längsnut einzusetzen und zwar zunächst so, dass die durchgehende Ausnehmung mit ihren offenen Seiten an den Seitenwandungen des offenen Längsnutenbereiches anliegt und der Nutenstein durch Drehung um 90° quer gestellt wird, so dass der gebildete Hammerkopf die Hinterschneidung der Längsnut untergreift.

Diese Ausbildung des Nutensteins ermöglicht beispielsweise den Anbau von zweiten Profilstäben am ersten Profilstab, wenn dieser fest positioniert ist und ein stimseitiger Zugang in die Längsnut zum Einschieben eines Nutensteines nicht mehr gegeben ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine montierte Verbindungsvorrichtung in einer perspektivischen Darstellung
- Figur 2: die Verbindungsvorrichtung gemäß Figur 1 in einer Explosivdarstellung
- Figur 3: eine Seitenansicht der Vorrichtung nach Figur 1
- Figur 4: eine Einzelheit der Vorrichtung in einer Draufsicht

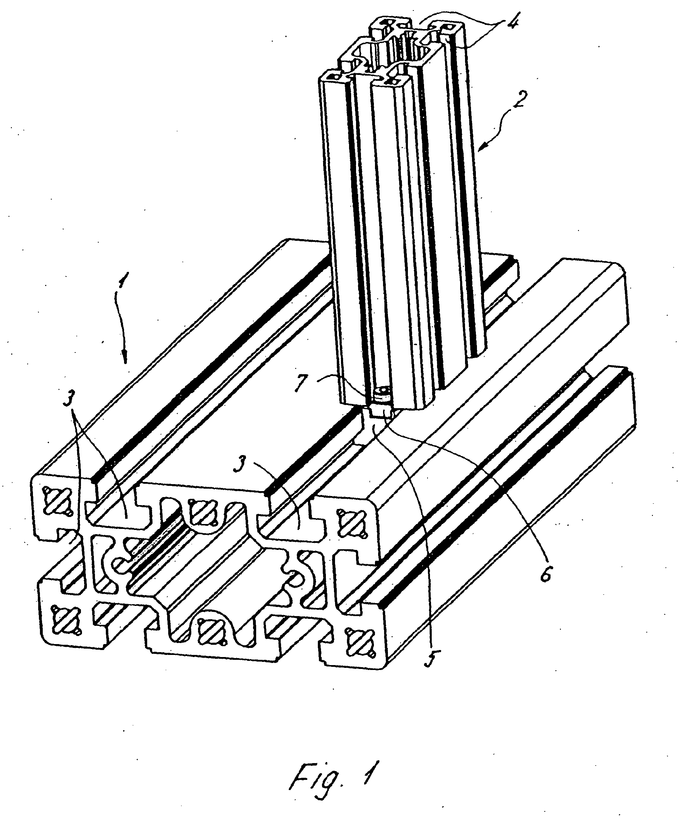

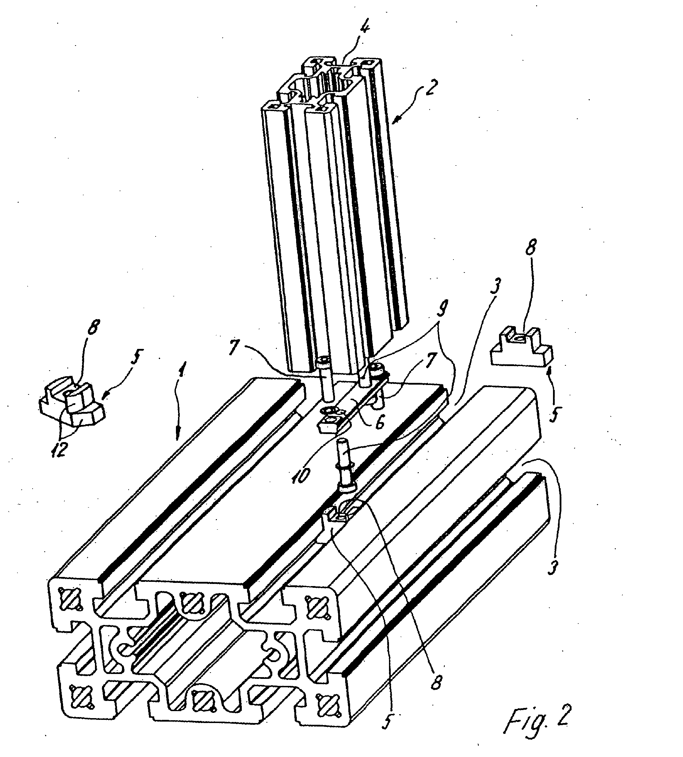

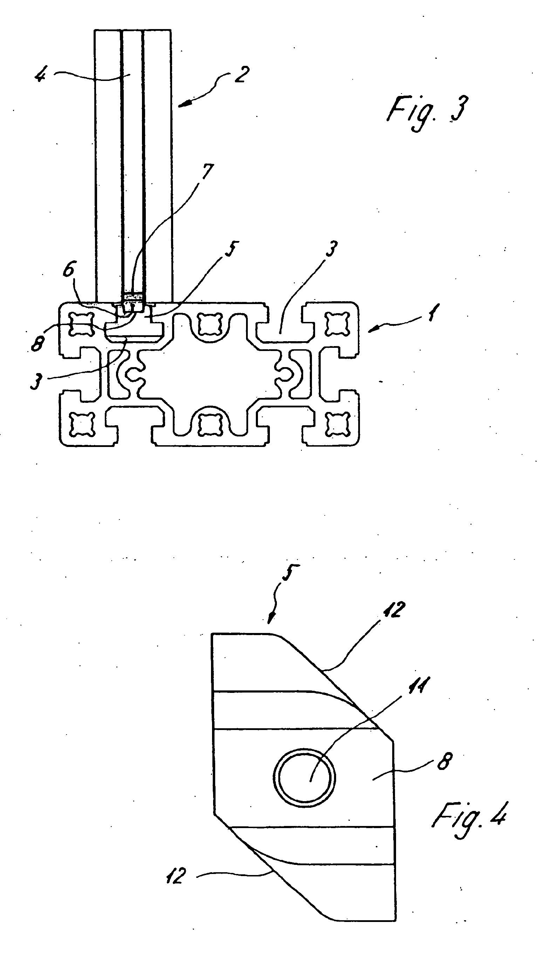

In den Figuren 1 bis 3 sind zwei Profilstäbe 1, 2 dargestellt, die winklig miteinander verbunden sind, wobei ein zweiter Profilstab 2 stimseitig am ersten Profilstab 1 anliegt.

Sowohl der erste Profilstab 1 wie auch der zweite Profilstab 2 sind mit Längsnuten 3, 4 versehen, die einen T-förmigen Querschnitt aufweisen.

Zur Verbindung der beiden Profilstäbe 1, 2 ist eine Verbindungsvorrichtung vorgesehen, mit einer Leiste 6 und damit verspannten Nutensteinen 5.

Die Leiste 6 ist über Befestigungsschrauben 9 stimseitig mit dem zweiten Profilstab 2 verbunden, wobei die Befestigungsschrauben 9 in längs sich erstreckende Schraubkanäle des zweiten Profilstabes 2 eingedreht sind und dabei jeweils eine Durchgangsbohrung 10 der Leiste 6 durchtreten.

Zwei Nutensteine 5, die hammerkopfartig oder T-förmig ausgebildet sind, liegen in einer der Längsnuten 3 des ersten, gegenüber dem zweiten Profilstab im Querschnitt größer dimensionierten Profilstabes 1 ein. Dabei sind die Längsnuten 3 des ersten Profilstabes 1 entsprechend größer bemessen als die Längsnuten 4 des zweiten Profilstabes 2.

Die in der hinterschnittenen Längsnut 3 einliegenden Nutensteine 5 sind mit der Leiste 6 durch Spannschrauben 7 verbunden, die durch die Leiste geführt in Gewindebohrungen 11 (Figur 4) eingedreht sind und den jeweiligen Nutenstein 5 gegen die Hinterschneidung der Längsnut 3 pressen.

Die Köpfe der Spannschrauben 7 ragen in die Längsnuten 4 des zweiten Profilstabes 2, das heißt, sie sind insoweit verdeckt angeordnet.

Die Leiste 6 entspricht in ihrer wesentlichen Breite der lichten Breite des offenen Teils der Längsnut 4 des zweiten Profilstabes 2. Um eine verdrehsichere Anlage der Leiste 6 an den größeren Nutensteinen 5 zu erreichen, sind diese erfindungsgemäß auf ihrer der offenen Längsseite der Längsnut 3 zugewandten Seite mit einer Ausnehmung 8 versehen, die sich durchgängig in Längsachsrichtung der Längsnut 3 erstreckt und beidseitig offen eine U-Form einnimmt.

In dieser Ausnehmung 8 liegt die von oben her eingesetzte Leiste 6 ein und zwar so, dass sie bündig mit der zugeordneten Außenseite des ersten Profilstabes 1 abschließt, wobei der Nutenstein 5 mit seinen die Ausnehmung 8 begrenzenden Seitenwandungen bis zur Außenseite bzw. nahezu zur Außenseite des ersten Profilstabes 1 ragt.

Insbesondere in der Figur 4 ist erkennbar, dass der Nutenstein 5 an den sich diagonal gegenüberliegenden Ecken jeweils eine Abschrägung 12 aufweist, wobei diese Abschrägungen 12 parallel verlaufen. Die Länge des Nutensteines 5, die gleichbedeutend ist mit der Länge der Ausnehmung 8 entspricht der lichten Breite des offenen Bereichs der Längsnut 3, so dass der Nutenstein 5 zunächst von oben her in die Längsnut 3 eingesetzt werden kann. Nach einer Drehung um 90°, die durch die Schrägen 12 ermöglicht wird, untergreift der Nutenstein 5 im Bereich der größeren Breite die Hinterschneidung der Längsnut 3, so dass die feste Verspannung mit der Leiste 6 und damit mit dem zweiten Profilstab 2 möglich ist.

### Bezugszeichenliste

- 1: erster Profilstab
- 2: zweiter Profilstab
- 3: Längsnut
- 4: Längsnut
- 5: Nutenstein
- 6: Leiste
- 7: Spannschraube
- 8: Ausnehmung
- 9: Befestigungsschraube
- 10: Durchgangsbohrung
- 11: Gewindebohrung
- 12: Schräge

## Patentansprüche

1. Zwei winklig zueinander stehende Profilstäbe (1, 2) miteinander verbindende Verbindungsvorrichtung, mit einer stirnseitig am zweiten Profilstab (2) befestigten Leiste (6), an der mindestens ein Nutenstein (5) befestigt ist, der in einer hinterschnittenen Längsnut (3) des ersten Profilstabes (1) einliegt und diese hintergreift, **dadurch gekennzeichnet, dass** der Nutenstein (5) auf seiner der offenen Längsseite der Längsnut (3) zugewandten Seite eine durch parallel zur Längsnut (3) verlaufende Seitenwände begrenzte Ausnehmung (8) aufweist, in der die von oben her eingesetzte Leiste (6) einliegt, wobei die Ausnehmung (8) in ihrer Breite etwa der Breite der Leiste (6) entspricht.

2. Verbindungsvorrichtung nach Anspruch 1, **dadurch gekennzeichnet, dass** die Ausnehmung (8) sich über die gesamte Länge des Nutensteines (5) erstreckt.

3. Verbindungsvorrichtung nach einem der vorhergehenden Ansprüche, **dadurch gekennzeichnet, dass** die Tiefe der Ausnehmung (8) etwa der Dicke der Leiste (6) entspricht.

4. Verbindungsvorrichtung nach einem der vorhergehenden Ansprüche, **dadurch gekennzeichnet, dass** der Nutenstein (5) an zwei sich diagonal gegenüberliegenden Eckbereichen jeweils mit einer Schräge (12) versehen ist.

5. Verbindungsvorrichtung nach einem der vorhergehenden Ansprüche, **dadurch gekennzeichnet, dass** die Schrägen (12) parallel zueinander verlaufen.

6. Verbindungsvorrichtung nach einem der vorhergehenden Ansprüche, **dadurch gekennzeichnet, dass** zwei sich diagonal gegenüberliegende Eckbereiche des Nutensteins (5) abgerundet sind.

7. Verbindungsvorrichtung nach einem der vorhergehenden Ansprüche, **dadurch gekennzeichnet, dass** die Länge des Nutensteins (5) gleichgroß oder geringfügig kleiner als die lichte Breite der Längsnut (3) im Bereich der zur Außenseite des ersten Profilstabes (1) hin offenen Seite ist.

## Claims

1. Connection device connecting to one another two profile bars (1, 2) standing at an angle to one another, with a batten (6) which is fastened at the end face to the second profile bar (2) and to which is fastened at least one sliding block (5) which is seated in an undercut longitudinal groove (3) of the first profile bar (1) and which engages behind the said longitudinal groove, **characterized in that** the sliding block (5) has, on its side facing the open longitudinal side of the longitudinal groove (3), a recess (8) which is delimited by side walls running parallel to the longitudinal groove (3) and in which is seated the batten (6) inserted from above, the recess (8) corresponding in its width approximately to the width of the batten (6).

2. Connection device according to Claim 1, **characterized in that** the recess (8) extends over the entire length of the sliding block (5).

3. Connection device according to one of the preceding claims, **characterized in that** the depth of the recess (8) corresponds approximately to the thickness of the batten (6).

4. Connection device according to one of the preceding claims, **characterized in that** the sliding block (5) is provided at each of two diagonally opposite corner regions with a slope (12).

5. Connection device according to one of the preceding claims, **characterized in that** the slopes (12) run parallel to one another.

6. Connection device according to one of the preceding claims, **characterized in that** two diagonally opposite corner regions of the sliding block (5) are rounded.

7. Connection device according to one of the preceding claims, **characterized in that** the length of the sliding block (5) is equal to or slightly smaller than the clear width of the longitudinal groove (3) in the region of the side open towards the outside of the first profile bar (1).

## Revendications

1. Dispositif d'assemblage, destiné à assembler entre elles deux barres profilées (1, 2) disposées en angle l'une par rapport à l'autre, comportant une baguette (6), qui est fixée sur le côté frontal de la deuxième barre profilée (2) et contre laquelle est fixé au moins un coulisseau (5), qui s'engage dans une rainure longitudinale (3) détalonnée de la première barre profilée (1) et enserre celle-ci de derrière, **caractérisé en ce que** le coulisseau (5), sur son côté orienté vers le côté longitudinal ouvert de la rainure longitudinale (3), comporte un évidement (8), qui est délimité par des parois latérales parallèles à la rainure longitudinale (3) et dans lequel est engagée la baguette (6) insérée à partir du dessus, l'évidement (8) ayant une largeur qui correspond sensiblement à la largeur de la baguette (6).

2. Dispositif d'assemblage selon la revendication 1, **caractérisé en ce que** l'évidement (8) s'étend sur toute la longueur du coulisseau (5).

3. Dispositif d'assemblage selon l'une quelconque des revendications précédentes, **caractérisé en ce que** la profondeur de l'évidement (8) correspond sensiblement à l'épaisseur de la baguette (6).

4. Dispositif d'assemblage selon l'une quelconque des revendications précédentes, **caractérisé en ce que** le coulisseau (5) est muni d'une rampe (12) dans chacune des deux zones d'angle diagonalement opposées.

5. Dispositif d'assemblage selon l'une quelconque des revendications précédentes, **caractérisé en ce que** les rampes (12) sont parallèles entre elles.

6. Dispositif d'assemblage selon l'une quelconque des revendications précédentes, **caractérisé en ce que** deux zones d'angle diagonalement opposées du coulisseau (5) sont arrondies.

7. Dispositif d'assemblage selon l'une quelconque des revendications précédentes, **caractérisé en ce que** la longueur du coulisseau (5) est égale ou légèrement inférieure à la largeur intérieure de la rainure longitudinale (3) dans la zone du côté ouvert vers le côté extérieur de la première barre profilée (1).
